# FASCICULE DE BREVET EUROPEEN

(11) **EP 3 872 457 B1**
(45) Date de publication et mention de la délivrance du brevet: **22.06.2022**
(21) Numéro de dépôt: 21154544.7
(22) Date de dépôt: 01.02.2021
(51) Int. Cl.: G08B 21/00, F16K 17/38, F16K 37/00, G01F 15/00, G01F 1/66

(54) **COMPTEUR DE FLUIDE INFLAMMABLE AGENCE POUR DÉTECTER UNE ANOMALIE DE TEMPÉRATURE**
MESSGERÄT FÜR BRENNBARE FLÜSSIGKEITEN ZUR ERKENNUNG VON TEMPERATURANOMALIEN
FLAMMABLE FLUID METER ARRANGED FOR DETECTING TEMPERATURE ANOMALIES

(30) Priorité: 25.02.2020 FR 2001827
(43) Date de publication de la demande: 01.09.2021
(73) Titulaire: Sagemcom Energy & Telecom SAS, 92500 Rueil-Malmaison (FR)
(72) Inventeur: TEBOULLE, Henri, 92500 RUEIL MALMAISON (FR)
(74) Mandataire: Lavaud, Thomas

(56) Documents cités:
- CN-Y- 2 189 310
- JP-A- 2008 202 815
- US-A1- 2013 098 469
- US-A1- 2017 254 685
- US-B2- 8 791 417

## Description

L'invention concerne le domaine des compteurs de fluide inflammable, de gaz naturel par exemple.

### ARRIERE PLAN DE L'INVENTION

Un réseau de distribution de gaz comprend des conduites reliées à des installations consommatrices de gaz et auxquelles sont raccordés des compteurs de gaz.

Il est connu de monter un boîtier de coupure sur une conduite à proximité d'un compteur de gaz, généralement en amont (c'est-à-dire du côté du réseau de distribution et non de l'installation) mais possiblement en amont du compteur de gaz, comme il est divulgué dans le document CN 2 189 310 Y.

Un tel boîtier de coupure comporte classiquement une vanne électromécanique pilotée pour sélectivement couper ou rétablir l'alimentation en gaz de l'installation. La vanne électromécanique est par exemple activée pour couper l'alimentation lorsqu'une fuite de gaz est détectée, ou bien lorsqu'il est prévu qu'une habitation reste vide pendant un certain temps, suite à un déménagement par exemple.

Le gestionnaire d'un réseau de distribution de gaz doit bien évidemment prendre des mesures conséquentes pour assurer la sécurité de la distribution. En effet, la distribution de gaz présente un certain nombre de risques bien connus, dont les conséquences peuvent être catastrophiques : incendie, explosion, intoxication, etc.

### OBJET DE L'INVENTION

L'invention a pour objet d'améliorer la sécurité d'un réseau de distribution d'un fluide inflammable.

### RESUME DE L'INVENTION

En vue de la réalisation de ce but, on propose un compteur de fluide inflammable comportant :
- une première interface de communication agencée pour communiquer via une liaison radioélectrique avec une deuxième interface de communication d'un boîtier de coupure comprenant une vanne électromécanique, et pour transmettre via la liaison radioélectrique une énergie électrique adaptée à alimenter électriquement la deuxième interface de communication du boîtier de coupure ;
- un capteur de température agencé pour mesurer une température du fluide inflammable ;
- un module de traitement agencé pour acquérir des mesures de température produites par le capteur de température, pour tenter de détecter la survenue d'une anomalie relative à la température du fluide inflammable, et pour, si la survenue d'une anomalie relative à la température du fluide inflammable est détectée, produire une trame de commande interne intégrant une commande de fermeture de la vanne électromécanique et transmettre ladite trame de commande interne à la deuxième interface de communication du boîtier de coupure via la première interface de communication pour fermer la vanne électromécanique.

Le compteur de fluide inflammable selon l'invention peut donc détecter la survenue d'une anomalie relative à la température du fluide inflammable, et agir sur la vanne électromécanique du boîtier de coupure pour interrompre si nécessaire la distribution du fluide inflammable. On réduit ainsi de manière importante le risque qu'un incendie ou une explosion ne se produise. Le compteur de fluide inflammable est situé à proximité du boîtier de coupure et décide de manière autonome de la nécessité de fermer ou non la vanne électromécanique, ce qui permet de couper la distribution très rapidement en cas d'anomalie liée à la température.

On propose de plus un compteur de fluide inflammable tel que précédemment décrit, dans lequel le module de traitement est agencé pour détecter la survenue d'une anomalie relative à la température du fluide inflammable lorsque la température du fluide inflammable est supérieure à un seuil de température prédéterminé ou lorsqu'une variation de la température du fluide inflammable est supérieure à un seuil de variation prédéterminé.

On propose aussi un compteur de fluide inflammable tel que précédemment décrit, dans lequel le module de traitement est agencé pour, suite à la détection de l'anomalie relative à la température du fluide inflammable et à la fermeture de la vanne électromécanique, acquérir via la première interface de communication une trame de commande externe intégrant une commande d'ouverture et pouvant être émise par un appareil mobile amené à proximité du compteur de fluide inflammable, et pour produire une trame de commande interne intégrant la commande d'ouverture et transmettre ladite trame de commande interne à la deuxième interface de communication du boîtier de coupure via la première interface de communication pour rouvrir la vanne électromécanique.

On propose de plus un compteur de fluide inflammable tel que précédemment décrit, dans lequel le module de traitement est agencé pour vérifier que la température du fluide inflammable est redevenue normale avant de rouvrir la vanne électromécanique.

On propose de plus un compteur de fluide inflammable tel que précédemment décrit, dans lequel le module de traitement est agencé pour vérifier en outre, suite à la réouverture de la vanne électromécanique, qu'une quantité du fluide inflammable distribuée pendant une durée prédéterminée est inférieure ou égale à un seuil de quantité prédéterminé, et pour refermer la vanne électromécanique si ce n'est pas le cas.

On propose de plus un compteur de fluide inflammable tel que précédemment décrit, dans lequel la première interface de communication est agencée pour écrire la première trame de commande interne dans une mémoire du boîtier de coupure, et pour lire une trame d'acquittement dans la mémoire du boîtier de coupure.

On propose de plus un compteur de fluide inflammable tel que précédemment décrit, dans lequel la trame de commande interne intègre une valeur courante d'un compteur de trames de commande internes, qui est incrémentée à chaque transmission de trame de commande interne par le compteur de fluide inflammable au boîtier de coupure.

On propose de plus un compteur de fluide inflammable tel que précédemment décrit, comprenant en outre des moyens d'authentification agencés pour authentifier la trame de commande interne.

On propose en outre un compteur de fluide inflammable tel que précédemment décrit, dans lequel les moyens d'authentification sont agencés pour chiffrer au moins partiellement la trame de commande interne en utilisant un algorithme de chiffrement ayant une clé de chiffrement symétrique qui est stockée dans une mémoire du compteur de fluide inflammable et dans une mémoire du boîtier de coupure.

On propose de plus un compteur de fluide inflammable tel que précédemment décrit, dans lequel les moyens d'authentification sont agencés pour déchiffrer la trame de commande externe.

On propose en outre un procédé de surveillance de la température d'un fluide inflammable, mis en œuvre dans un compteur de fluide inflammable tel que précédemment décrit, et comprenant les étapes de :
- acquérir les mesures de température produites par le capteur de température ;
- tenter de détecter la survenue d'une anomalie relative à la température du fluide inflammable ;
- si la survenue d'une anomalie relative à la température du fluide inflammable est détectée, produire une trame de commande interne intégrant une commande de fermeture de la vanne électromécanique et transmettre ladite trame de commande interne à la deuxième interface de communication du boîtier de coupure via la première interface de communication pour fermer la vanne électromécanique.

On propose de plus un programme d'ordinateur comprenant des instructions qui conduisent le compteur de fluide inflammable tel que précédemment décrit à exécuter les étapes du procédé de surveillance qui vient d'être décrit.

On propose en outre un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un Système d'Information, un concentrateur de données, un compteur de gaz selon l'invention, un boîtier de coupure et un appareil mobile ;
[Fig. 2] la figure 2 représente le boîtier de coupure ;
[Fig. 3] la figure 3 représente des échanges de commandes, de trames et de messages entre les entités de la figure 1, dans le cas où le compteur de gaz détecte la survenue d'une anomalie relative à la température ;
[Fig. 4] la figure 4 représente des échanges de commandes, de trames et de messages entre les entités de la figure 1, dans le cas où l'appareil mobile commande la réouverture de la vanne électromécanique ;
[Fig. 5] la figure 5 représente des étapes de vérification réalisées par le compteur de gaz au moment de rouvrir la vanne électromécanique ;
[Fig. 6] la figure 6 est une figure similaire aux figures 3 et 4, dans le cas où le SI commande la réouverture de la vanne électromécanique ;
[Fig. 7] la figure 7 représente une trame de commande interne ;
[Fig. 8] la figure 8 représente une trame d'acquittement ; [Fig. 9] la figure 9 représente une trame de commande externe.

### DESCRIPTION DETAILLEE DE L'INVENTION

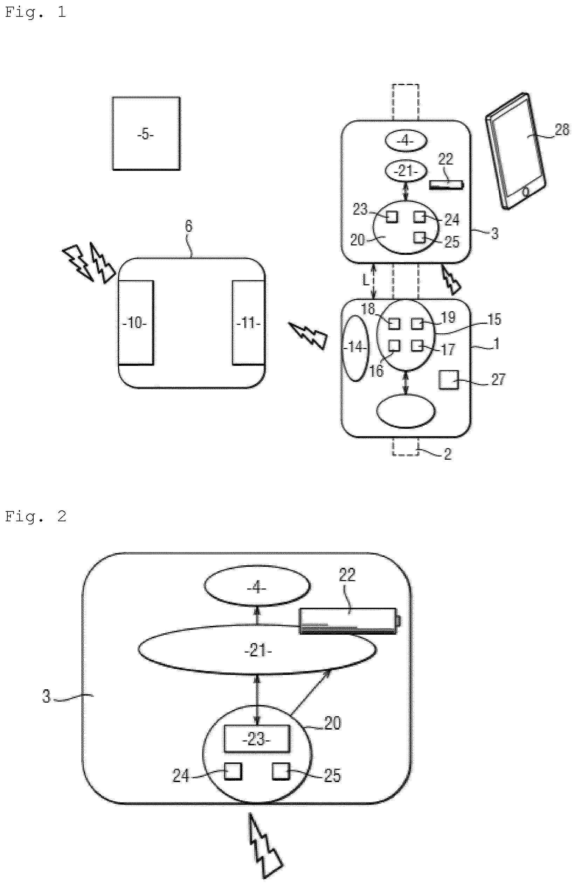

En référence aux figures 1 et 2, le compteur de fluide inflammable selon l'invention est ici un compteur de gaz 1 qui est monté sur une conduite 2 d'un réseau de distribution de gaz naturel et qui est utilisé pour mesurer la consommation en gaz naturel d'une installation.

Un boîtier de coupure 3 est monté sur la conduite 2 à proximité du compteur de gaz 1. La distance L entre le compteur de gaz 1 et le boîtier de coupure 3 est par exemple comprise entre 1cm et 10cm. Le boîtier de coupure 3 comprend une vanne électromécanique 4 qui est utilisée pour sélectivement couper ou rétablir l'alimentation en gaz de l'installation.

Dans un mode de fonctionnement nominal, les commandes d'ouverture ou de fermeture de la vanne électromécanique 4 sont émises par un SI 5 (pour Système d'Information) qui transmet les commandes d'ouverture ou de fermeture au compteur de gaz 1 via un concentrateur de données 6. Le compteur de gaz 1 retransmet ces commandes d'ouverture ou de fermeture au boîtier de coupure 3.

On décrit brièvement chacune de ces entités.

Le SI 5 comprend un ou des serveurs et un module de communication qui lui permet de communiquer via un réseau cellulaire de type 2G, 3G ou 4G avec des concentrateurs de données tels que le concentrateur de données 6.

Le concentrateur de données 6 comprend des premiers moyens de communication 10 pour communiquer avec le SI 5 via un réseau 2G, 3G ou 4G, et des deuxièmes moyens de communication 11 pour communiquer avec le compteur de gaz 1. Les deuxièmes moyens de communication 11 permettent au concentrateur de données 6 de communiquer via une communication radio, qui utilise ici le standard *Wize* opérant à la fréquence de 169MHz.

Le compteur de gaz 1 est un compteur ultrasonique. Le compteur de gaz 1 est un compteur communicant et comprend tout d'abord des moyens de communication 14 qui sont eux aussi adaptés à communiquer via une communication radio utilisant le standard *Wize* opérant à la fréquence de 169MHz. Le compteur de gaz 1 peut recevoir les commandes d'ouverture ou de fermeture de la vanne électromécanique 4, provenant du SI 5 et via le concentrateur de données 6, grâce à ces moyens de communication 14.

Le compteur de gaz 1 comprend aussi une première interface de communication 15 qui est ici une interface NFC maître (NFC pour *Near Field Communication,* ou « Communication en champ proche » en français).

La première interface de communication 15 comporte tout d'abord un module de traitement, qui comprend un premier composant de traitement. Le premier composant de traitement est par exemple un processeur, un microcontrôleur, ou bien un circuit logique programmable tel qu'un FPGA (pour *Field Programmable Gate Arrays)* ou un ASIC (pour *Application Specific Integrated Circuit)* . Le premier composant de traitement est ici un premier microcontrôleur 16. La première interface de communication 15 comporte aussi une première mémoire 17, un émetteur/récepteur NFC 18 et une première antenne 19. L'émetteur/récepteur NFC 18 comprend ici un amplificateur, un modulateur et un démodulateur.

Le compteur de gaz 1 comporte de plus des moyens d'authentification qui comprennent ici un module logiciel programmé dans le premier microcontrôleur 16 et une zone de la première mémoire 17.

Le compteur de gaz 1 comprend un outre un capteur de température 27 qui mesure la température du gaz au niveau du compteur de gaz 1. Le premier microcontrôleur 16 du module de traitement acquiert les mesures de température produites par le capteur de température 27. Bien sûr, il est possible de prévoir si nécessaire que le module de traitement comporte des composants matériels et/ou logiciels additionnels pour mettre en forme et acquérir les mesures de température, et par exemple un convertisseur analogique numérique et des composants de compensation divers.

Le boîtier de coupure 3, quant à lui, comprend, outre la vanne électromécanique 4, une deuxième interface de communication 20 qui est ici une interface NFC esclave, un deuxième composant de traitement, et une pile 22. Le deuxième composant de traitement est par exemple un processeur, un microcontrôleur, ou bien un circuit logique programmable tel qu'un FPGA ou un ASIC. Le deuxième composant de traitement est en l'occurrence un deuxième microcontrôleur 21.

La deuxième interface de communication 20 comprend une deuxième mémoire 23, un récepteur NFC 24 et une deuxième antenne 25. Le récepteur NFC 24 comprend par exemple un démodulateur.

Le deuxième microcontrôleur 21 est agencé pour piloter (via un *driver,* ou « pilote » en français, non représenté sur les figures) une ouverture ou une fermeture de la vanne électromécanique 4. Le deuxième microcontrôleur 21 comprend ici une interface I2C pour accéder à la deuxième mémoire 23 en lecture et en écriture.

La pile 22 du boîtier de coupure 3 est utilisée pour alimenter le deuxième microcontrôleur 21 et la vanne électromécanique 4 (ainsi que le *driver).*

On décrit maintenant la manière dont le compteur de gaz 1 surveille la température du gaz.

Comme on l'a vu précédemment, le compteur de gaz comporte un capteur de température 27.

Le capteur de température 27 mesure la température du gaz, et le premier microcontrôleur 16 acquiert les mesures de température et tente de détecter la survenue d'une anomalie relative à la température du gaz.

L'anomalie relative à la température du gaz peut être soit une température anormale du gaz, soit une variation anormale de la température du gaz.

Pour détecter une température anormale du gaz, le premier microcontrôleur 16 compare la température du gaz avec un seuil de température prédéterminé et, lorsque la température du gaz devient supérieure au seuil de température prédéterminé, le premier microcontrôleur 16 détecte une température anormale du gaz. Le seuil de température prédéterminé est un seuil paramétrable, typiquement égal à 120°C.

Pour détecter une variation anormale de la température du gaz, le premier microcontrôleur 16 compare la variation de la température du gaz avec un seuil de variation prédéterminé (positif) et, lorsque la variation de la température du gaz est supérieure au seuil de variation prédéterminé pendant une durée prédéterminée, le premier microcontrôleur 16 détecte une variation anormale de la température du gaz. Le seuil de variation prédéterminé est un seuil paramétrable, exprimé en degrés par seconde, typiquement égal à 10°C/s. La durée prédéterminée est typiquement égale à 10s.

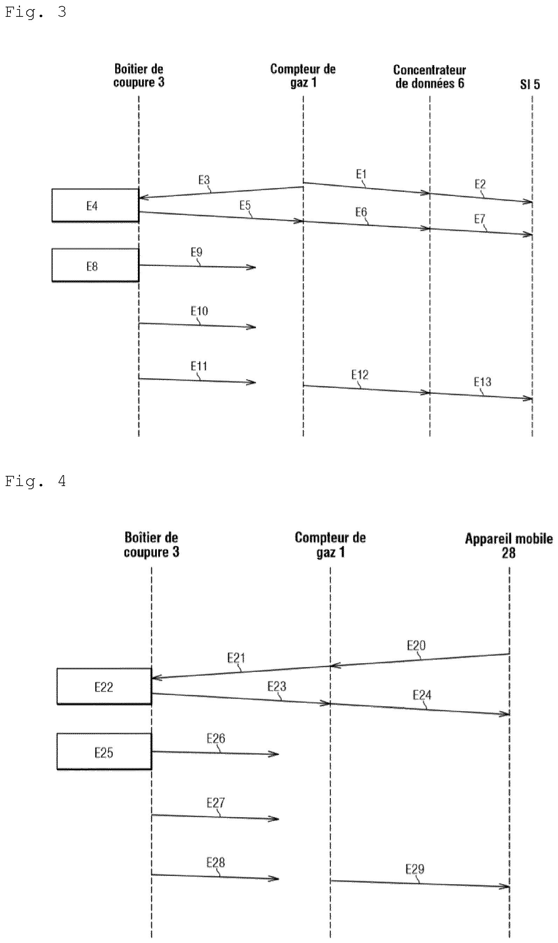

En référence à la figure 3, lorsque le compteur de gaz 1 détecte la survenue d'une anomalie relative à la température du gaz, le premier microcontrôleur 16 du compteur de gaz 1 génère une alarme relative à la température du gaz à destination du SI 5. L'alarme relative à la température du gaz est tout d'abord transmise par le compteur de gaz 1 au concentrateur de données 6 via la communication radio à 169MHz (étape E1), puis par le concentrateur de données 6 au SI 5 via le réseau 2G, 3G ou 4G, en utilisant une requête *http POST* et le protocole *TR-69* (étape E2).

Simultanément, le premier microcontrôleur 16 du compteur de gaz 1 produit une trame de commande interne qui intègre une commande de fermeture de la vanne électromécanique 4 du boîtier de coupure 3.

La trame de commande interne est authentifiée par les moyens d'authentification du compteur de gaz 1. L'authentification consiste à chiffrer au moins partiellement la trame de commande interne.

Les moyens d'authentification utilisent un algorithme de chiffrement ayant une clé de chiffrement symétrique « secrète » qui est stockée dans la zone de la première mémoire 17 de la première interface de communication 15.

L'algorithme de chiffrement est un algorithme de chiffrement AES (pour *Advanced Encryption Standard)* utilisant le mode d'opération GCM (pour *Galois Counter Mode*). L'algorithme de chiffrement permet de chiffrer et de déchiffrer des données par blocs de 128 bits. La clé de chiffrement symétrique est une clé sur 128 bits.

La clé de chiffrement symétrique est aussi stockée dans une première zone de la deuxième mémoire 23 de la deuxième interface de communication 20 du boîtier de coupure 3, et est donc connue à la fois de la première interface de communication 15 et de la deuxième interface de communication 20. Le compteur de gaz 1 et le boîtier de coupure 3 sont associés via cette même clé de chiffrement symétrique. L'association est par exemple réalisée en usine, à la fin de la fabrication du compteur de gaz 1 et du boîtier de coupure 3, par chargement de la clé de chiffrement symétrique dans la première mémoire 17 du compteur de gaz 1 et dans la deuxième mémoire 23 de l'organe de coupure 3. L'association peut aussi être réalisée lors de l'installation sur site.

Le premier microcontrôleur 16 transmet la trame de commande interne à la deuxième interface de communication 20 du boîtier de coupure 3 via la première interface de communication 15, et donc en utilisant la technologie NFC, pour fermer la vanne électromécanique 4 (étape E3).

La première interface de communication 15 produit pour cela grâce à l'émetteur/récepteur NFC 18 et à la première antenne 19 un champ électromagnétique qui va induire un courant dans la deuxième antenne 25 de la deuxième interface de communication 20. Le champ électromagnétique permet de former une liaison radioélectrique permettant à la première interface de communication 15 de transmettre à la deuxième interface de communication 20 la trame de commande interne, mais aussi une énergie électrique qui alimente la deuxième interface de communication 20. La deuxième interface de communication 20 n'est donc pas alimentée par la pile 22 du boîtier de coupure 3 mais uniquement par cette énergie électrique transmise via la liaison radioélectrique.

On note ici qu'avantageusement, pour optimiser la transmission d'énergie électrique, la première antenne 19 et la deuxième antenne 25 sont positionnées en face l'une de l'autre et s'étendent chacune dans un plan perpendiculaire à l'axe passant par leurs centres respectifs.

La première interface de communication 15 écrit alors la trame de commande interne dans une deuxième zone de la deuxième mémoire 23 de la deuxième interface de communication 20.

Le deuxième microcontrôleur 21 du boîtier de coupure 3 se trouve en général, par défaut, dans un mode de veille. Lorsque la deuxième interface de communication 20 reçoit l'énergie électrique transmise par la première interface de communication 15, elle produit un signal d'activation qui va réveiller le deuxième microcontrôleur 21.

Le signal d'activation est un signal d'interruption appliqué sur une patte du deuxième microcontrôleur 21. En variante, un signal de type « *memory busy* », généré par la deuxième interface de communication 20, pourrait aussi être utilisé pour réveiller le deuxième microcontrôleur 21.

Le deuxième microcontrôleur 21 va alors accéder à la trame de commande interne en lisant dans la deuxième zone de la deuxième mémoire 23. Le deuxième microcontrôleur 21 déchiffre grâce à sa connaissance de la clé de chiffrement symétrique la trame de commande interne, extrait de la trame de commande interne la commande de fermeture, et pilote la vanne électromécanique 4 pour la fermer.

Puis, suite à la fermeture de la vanne électromécanique 4, le deuxième microcontrôleur 21 écrit dans une troisième zone de la deuxième mémoire 23 de la deuxième interface de communication 20, à destination de la première interface de communication 15 du compteur de gaz 1, une trame d'acquittement intégrant un acquittement (étape E4). On note que la troisième zone de la deuxième mémoire 23 et la deuxième zone de la deuxième mémoire 23 sont possiblement mais pas nécessairement les mêmes.

Le deuxième microcontrôleur 21 authentifie la trame d'acquittement en utilisant l'algorithme de chiffrement précédemment évoqué.

La première interface de communication 15 du compteur de gaz 1 accède à la troisième zone de la deuxième mémoire 23 de la deuxième interface de communication 20, pour tenter de lire dans la troisième zone de la deuxième mémoire 23 une trame d'acquittement (étape E5). La lecture est réalisée par une méthode de *polling* : à intervalles réguliers, la première interface de communication 15 accède au contenu de la troisième zone de la deuxième mémoire 23 pour déterminer si une trame d'acquittement se trouve bien dans la troisième zone de la deuxième mémoire 23.

Si la trame d'acquittement est bien présente lors de la première tentative de lecture, le compteur de gaz 1 va lui-même remonter un message d'acquittement au concentrateur de données 6 (étape E6). Le concentrateur de données 6 retransmet le message d'acquittement au SI 5 (étape E7).

Suite à la transmission de la trame de commande interne au boîtier de coupure 3, si aucune trame d'acquittement n'est stockée dans la troisième zone de la deuxième mémoire 23 (étape E8), la première tentative de lecture échoue (étape E9). La première interface de communication 15 effectue alors une deuxième tentative de lecture (étape E10). Si celle-ci échoue, la première interface de communication 15 effectue une troisième tentative de lecture (étape E11). Chaque tentative de lecture est séparée de la précédente d'une durée prédéterminée, ici égale à 1mn. Après un nombre prédéterminé de tentatives de lecture infructueuses, ici égal à 3, le compteur de gaz 1 remonte un message d'erreur au concentrateur de données 6 (étape E12). Le concentrateur de données 6 retransmet le message d'erreur au SI 5 et transmet une alerte pour informer le SI 5 que la vanne électromécanique 4 du boîtier de coupure 3 n'a pas été refermée (étape E13).

Le premier microcontrôleur 16 de la première interface de communication 15 met en œuvre un compteur de trames de commande internes dont la valeur courante est intégrée dans chaque trame de commande interne. Le compteur de trames de commande internes est incrémenté par le premier microcontrôleur 16 à chaque transmission de trame de commande interne par le compteur de gaz 1 au boîtier de coupure 3.

Ce compteur de trames de commande internes permet d'éviter le « rejeu » d'une trame de commande interne, c'est-à-dire d'éviter qu'une ancienne trame de commande interne, écoutée et acquise par un individu malintentionné, soit utilisée pour produire une commande d'ouverture ou de fermeture destinée à commander frauduleusement le boîtier de coupure 3. Ainsi, lorsque le deuxième microcontrôleur 21 du boîtier de coupure 3 acquiert une trame de commande interne, il vérifie que la valeur courante du compteur de trames de commande internes, intégrée dans ladite trame de commande interne, est supérieure strictement à celle intégrée dans la trame de commande interne précédente.

De même, le deuxième microcontrôleur 21 du boîtier de coupure 3 met en œuvre un compteur de trames d'acquittement qui est incrémenté à chaque fois que le deuxième microcontrôleur 21 produit une trame d'acquittement, et dont la valeur courante est intégrée dans la trame d'acquittement.

Suite à la réception par le SI 5 de l'alarme relative à la température du gaz, un opérateur se déplace et vient constater et résoudre le problème qui a causé cette alarme.

Lorsque tout risque a été éliminé, l'opérateur commande localement la réouverture de la vanne électromécanique 4. L'opérateur est muni pour cela d'un appareil mobile 28, par exemple d'un *smartphone.* L'appareil mobile 28 a récupéré préalablement la clé de chiffrement symétrique en vigueur via le KMS (pour *Key Management System,* ou « Système de Gestion des Clés » en français).

L'appareil mobile 28 est amené à proximité du compteur de gaz 1 et produit une trame de commande externe intégrant une commande d'ouverture de la vanne électromécanique 4. La trame de commande externe est chiffrée par l'appareil mobile 28.

La trame de commande externe est envoyée en NFC. Le premier microcontrôleur 16 du compteur de gaz 1 acquiert la trame de commande externe et la déchiffre grâce à sa connaissance de la clé de chiffrement symétrique. Le compteur de gaz 1 comporte aussi un système de réveil tel que celui décrit plus tôt pour le boîtier de coupure 3.

Le premier microcontrôleur 16 du compteur de gaz 1 produit alors une trame de commande interne intégrant la commande d'ouverture et transmet ladite trame de commande interne à la deuxième interface de communication 20 du boîtier de coupure 3 via la première interface de communication 15 du compteur de gaz 1 pour rouvrir la vanne électromécanique 4.

Cette situation est illustrée sur la figure 4.

L'opérateur se rend à proximité du compteur de gaz 1 et donc du boîtier de coupure 3, en étant muni de l'appareil mobile 28.

L'appareil mobile 28 envoie au compteur de gaz 1 en NFC une trame de commande externe intégrant une commande d'ouverture de la vanne électromécanique 4 (étape E20).

Le premier microcontrôleur 16 du compteur de gaz 1 acquiert la trame de commande externe et produit une trame de commande interne intégrant la commande d'ouverture. La trame de commande interne est authentifiée par les moyens d'authentification du compteur de gaz 1.

Le compteur de gaz 1 transmet alors la trame de commande interne au boîtier de coupure 3 en utilisant la technologie NFC, de la même manière que précédemment décrit (étape E21 - voir étape E3).

Le deuxième microcontrôleur 21 pilote la vanne électromécanique 4 pour la rouvrir.

Puis, suite à la réouverture de la vanne électromécanique 4, le deuxième microcontrôleur 21 produit et authentifie la trame d'acquittement, puis l'écrit dans la deuxième mémoire 23 (étape E22).

La première interface de communication 15 tente de lire dans la deuxième mémoire 23 une trame d'acquittement (étape E23). La lecture est réalisée par la méthode de *polling* décrite plus tôt.

Si la trame d'acquittement est bien présente lors de la première tentative de lecture, le compteur de gaz 1 remonte un message d'acquittement à l'appareil mobile 28 (étape E24) .

Suite à la transmission de la trame de commande interne au boîtier de coupure 3, si aucune trame d'acquittement n'est stockée dans la troisième zone de la deuxième mémoire 23 (étape E25), la première tentative de lecture échoue (étape E26). La première interface de communication 15 effectue alors une deuxième tentative de lecture (étape E27). Si celle-ci échoue, la première interface de communication 15 effectue une troisième tentative de lecture (étape E28). Chaque tentative de lecture est séparée de la précédente d'une durée prédéterminée, ici égale à 1mn. Après un nombre prédéterminé de tentatives de lecture infructueuses, ici égal à 3, le compteur de gaz 1 remonte un message d'erreur à l'appareil mobile 28 (étape E29).

On note ici que, au moment de la réouverture de la vanne électromécanique 4 du boîtier de coupure 3, le premier microcontrôleur 16 du compteur de gaz 1 vérifie deux conditions.

Tout d'abord, avant de rouvrir la vanne électromécanique 4, et donc avant de transmettre à la deuxième interface 20 du boîtier de coupure 3 la trame de commande interne intégrant la commande d'ouverture, le premier microcontrôleur 16 du compteur de gaz 1 vérifie que la température du gaz est redevenue normale.

Le premier microcontrôleur 16 vérifie en outre, suite à la réouverture de la vanne électromécanique 4, qu'une quantité de gaz distribuée pendant une (courte) durée prédéterminée est inférieure ou égale à un seuil de quantité prédéterminé (exprimé en volume de gaz par exemple). Si ce n'est pas le cas, le premier microcontrôleur 16 referme la vanne électromécanique 4. En effet, comme la vanne électromécanique 4 était fermée, l'installation ne consomme pas de gaz au moment de la réouverture de la vanne électromécanique 4, de sorte que le compteur de gaz 1 ne devrait voir aucun débit de gaz à la réouverture de la vanne électromécanique 4, sauf dans le cas où une fuite de gaz se produit dans l'installation.

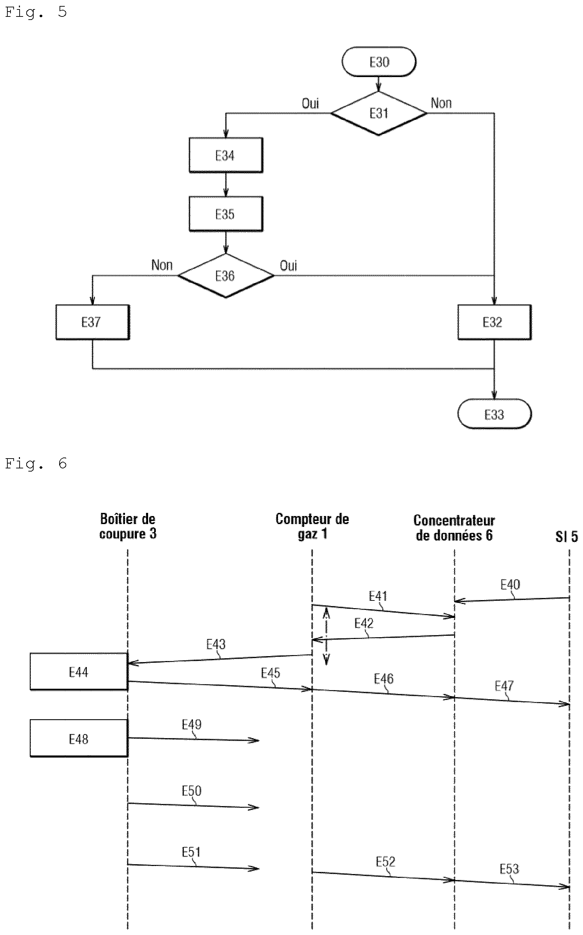

Les étapes de ce procédé de vérification sont illustrées sur la figure 5.

Le procédé de vérification début à l'étape E30.

Le premier microcontrôleur 16 du compteur de gaz 1 analyse les mesures de température, et vérifie que l'anomalie relative à la température du gaz a bien disparu (étape E31).

Si ce n'est pas le cas, et donc si une anomalie est toujours présente, le compteur de gaz 1 envoie une alerte à l'appareil mobile 28 (étape E32). Le procédé de vérification s'achève (étape E33).

Si l'anomalie a bien disparu, le premier microcontrôleur 16 acquiert et mémorise un premier index de mesure associé au temps présent T0, puis transmet la trame de commande interne intégrant la commande d'ouverture pour ouvrir la vanne électromécanique 4 (étape E34). Le premier index de mesure est représentatif de la quantité de gaz distribuée par la conduite 2 jusqu'au temps présent T0. Le premier microcontrôleur 16 attend pendant une durée égale à une durée prédéterminée, ici 5 secondes (étape E35), puis acquiert un deuxième index de mesure associé au temps T0+5 secondes. Ici, les index sont des volumes exprimés en litres.

Le premier microcontrôleur 16 vérifie si la différence entre le deuxième index et le premier index est supérieure strictement ou non à un seuil de quantité prédéterminé, ici par exemple égal à 1 litre (étape E36).

Si la différence entre le deuxième index et le premier index est supérieure strictement au seuil de quantité prédéterminé, le compteur de gaz 1 envoie une alerte à l'appareil mobile 28 (étape E32). Le procédé de vérification s'achève (étape E33).

Sinon, le compteur de gaz 1 envoie un message d'accord de réouverture à l'appareil mobile 28 (étape E37) . Le procédé de vérification s'achève (étape E33).

En référence à la figure 6, alternativement, le SI 5 peut parfaitement commander (via le concentrateur de données 6 et le compteur de gaz 1) la réouverture de la vanne électromécanique 4.

Le SI 5 produit une commande d'ouverture de la vanne électromécanique 4 du boîtier de coupure 3, et transmet la commande d'ouverture au concentrateur de données 6 en utilisant une requête *http POST* et le protocole *TR-69* (étape E40) .

A intervalles réguliers, le compteur de gaz 1 envoie une trame de collecte au concentrateur de données 6 (étape E41) .

Le concentrateur de données 6 attend la réception de la trame de collecte et, lorsqu'il reçoit la trame de collecte, le concentrateur de données 6 envoie la commande d'ouverture dans la fenêtre d'écoute du compteur de gaz 1 (étape E42). Le concentrateur de données 6 utilise pour cela la communication radio utilisant le standard *Wize* opérant à la fréquence de 169MHz.

Le premier microcontrôleur 16 du compteur de gaz 1 produit une trame de commande interne qui intègre la commande d'ouverture de la vanne électromécanique 4 du boîtier de coupure 3.

La trame de commande interne est authentifiée par les moyens d'authentification du compteur de gaz 1.

Le compteur de gaz 1 transmet alors la trame de commande interne au boîtier de coupure 3 en utilisant la technologie NFC, de la même manière que précédemment décrit (étape E43).

Le deuxième microcontrôleur 21 pilote la vanne électromécanique 4 pour l'ouvrir.

Puis, suite à l'ouverture de la vanne électromécanique 4, le deuxième microcontrôleur 21 produit et authentifie la trame d'acquittement, puis l'écrit dans la deuxième mémoire 23 (étape E44).

La première interface de communication 15 tente de lire dans la deuxième mémoire 23 une trame d'acquittement (étape E45). La lecture est réalisée par la méthode de *polling* décrite plus tôt.

Si la trame d'acquittement est bien présente lors de la première tentative de lecture, le compteur de gaz 1 remonte un message d'acquittement au concentrateur de données 6 (étape E46) qui le remonte au SI 5 (étape E47).

Suite à la transmission de la trame de commande interne au boîtier de coupure 3, si aucune trame d'acquittement n'est stockée dans la troisième zone de la deuxième mémoire 23 (étape E48), la première tentative de lecture échoue (étape E49). La première interface de communication 15 effectue alors une deuxième tentative de lecture (étape E50). Si celle-ci échoue, la première interface de communication 15 effectue une troisième tentative de lecture (étape E51). Chaque tentative de lecture est séparée de la précédente d'une durée prédéterminée, ici égale à 1mn. Après un nombre prédéterminé de tentatives de lecture infructueuses, ici égal à 3, le compteur de gaz 1 remonte un message d'erreur au concentrateur de données 6 (étape 52) qui le remonte au SI 5 (étape 53).

On note que la figure 6 correspond aussi au cas « nominal » de fonctionnement du système : lorsqu'aucune anomalie relative à la température du gaz n'est détectée, c'est le SI 5 qui produit les commandes d'ouverture ou de fermeture pour actionner la vanne électromécanique 4 du boîtier de coupure 3.

On décrit maintenant plus en détail la structure d'une trame de commande interne (produite par le compteur de gaz 1 et à destination du boîtier de coupure 3), d'une trame d'acquittement (produite par le boîtier de coupure 3 et à destination du compteur de gaz 1) et d'une trame de commande externe (produite par l'appareil mobile 28 et à destination du compteur de gaz 1).

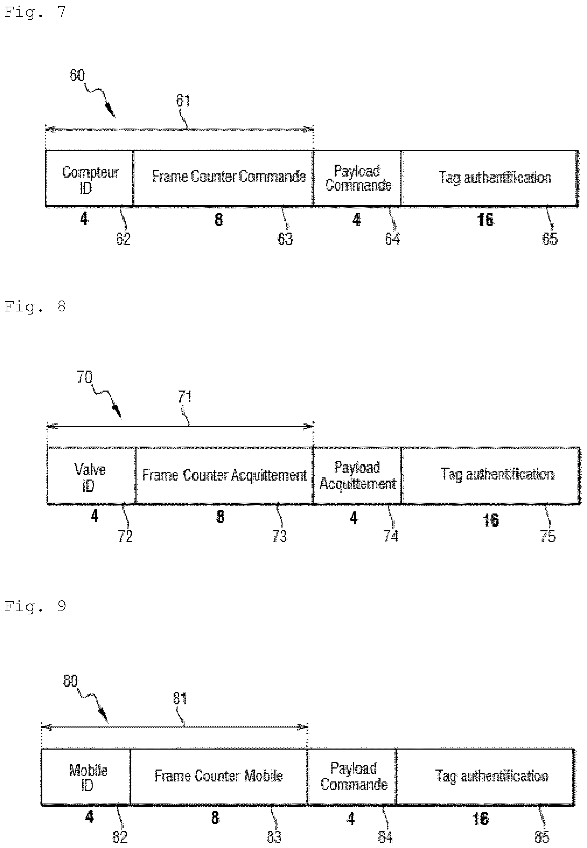

En référence à la figure 7, une trame de commande interne 60 comprend tout d'abord une valeur initiale IV 61 (pour *Initial Value),* qui est non chiffrée et qui est conforme à la recommandation NIST *Special Publication* 800-38, chapitre 8.2.1.

La valeur initiale IV 61 est découpée en un premier champ 62 et en un deuxième champ 63.

Le premier champ 62 est un champ de 4 octets qui contient un identifiant de l'émetteur du message, en l'occurrence un identifiant du compteur de gaz 1.

Le deuxième champ 63 est un champ de 8 octets qui contient la valeur courante du compteur de trames de commande internes. Le deuxième champ 63 permet plus de 18×10¹⁸ commandes sans changement de clé de chiffrement symétrique, et est réinitialisé à 0 lors de chaque changement de clé de chiffrement symétrique.

La trame de commande interne 60 comprend ensuite une *payload* 64 (ou « charge utile » en français) qui est un champ fonctionnel destiné à identifier la fonction de la trame : commande d'ouverture, commande de fermeture ou acquittement. La *payload* 64 est chiffrée par l'algorithme de chiffrement AES utilisant le mode d'opération GCM, et comporte 4 octets.

La *payload* 64 comprend un octet de commande qui prend les valeurs suivantes :
'0' : pour une commande d'ouverture de la vanne électromécanique 4. Il s'agit alors d'une trame de commande interne venant du compteur de gaz 1 ;
'1' : pour une commande de fermeture de la vanne électromécanique 4. Il s'agit alors d'une trame de commande interne venant du compteur de gaz 1 ;
'2' : pour un acquittement. Il s'agit alors d'une trame d'acquittement venant du boîtier de coupure 3.

L'octet de commande de la *payload* 64 de la trame de commande interne 60 a donc pour valeur '0' dans le cas d'une commande d'ouverture et pour valeur '1' dans le cas d'une commande de fermeture.

La *payload* 64 comprend de plus 3 octets non utilisés.

On note que l'algorithme de chiffrement utilisé génère un aléa de 16 octets sur l'octet de commande.

La trame de commande interne 60 comprend ensuite un code d'authentification de message 65 (aussi appelé tag) sur 16 octets généré par l'algorithme de chiffrement AES utilisant le mode d'opération GCM. Le code d'authentification de message 65 permet d'authentifier la trame de commande interne 60, d'assurer l'intégrité des données qu'elle contient et de confirmer que la trame de commande interne 60 provient bien d'un émetteur attendu (en l'occurrence ici du compteur de gaz 1).

En référence à la figure 8, une trame d'acquittement 70 comprend tout d'abord une valeur initiale IV 71 découpée en un premier champ 72 et en un deuxième champ 73.

Le premier champ 72 est un champ de 4 octets qui contient un identifiant de l'émetteur du message, en l'occurrence un identifiant du boîtier de coupure 3.

Le deuxième champ 73 est un champ de 8 octets qui contient la valeur courante du compteur de trames d'acquittement. Ce deuxième champ 73 permet plus de 18×10¹⁸ acquittements sans changement de clé de chiffrement symétrique, et est réinitialisé à 0 lors de chaque changement de clé de chiffrement symétrique.

La trame d'acquittement 70 comprend ensuite une *payload* 74 chiffrée par l'algorithme de chiffrement AES utilisant le mode d'opération GCM, et comporte 4 octets.

L'octet de commande de la *payload* 74 de la trame d'acquittement 70 a pour valeur '2'.

La *payload* 74 comprend de plus 3 octets non utilisés.

On note que l'algorithme de chiffrement utilisé génère un aléa de 16 octets sur l'octet de commande.

La trame d'acquittement 70 comprend ensuite un code d'authentification de message 75 (aussi appelé tag) sur 16 octets généré par l'algorithme de chiffrement AES utilisant le mode d'opération GCM. Le code d'authentification de message 75 permet d'authentifier la trame d'acquittement 70, d'assurer l'intégrité des données qu'elle contient et de confirmer que la trame d'acquittement 70 provient bien d'un émetteur attendu (en l'occurrence ici du boîtier de coupure 3) .

En référence à la figure 9, une trame de commande externe 80 comprend tout d'abord une valeur initiale IV 81 (pour *Initial Value),* qui est non chiffrée et qui est conforme à la recommandation NIST *Special Publication* 800-38, chapitre 8.2.1.

La valeur initiale IV 81 est découpée en un premier champ 82 et en un deuxième champ 83.

Le premier champ 82 est un champ de 4 octets qui contient un identifiant de l'émetteur du message. Ici, on choisit un même identifiant fixe pour tous les appareils mobiles.

Le deuxième champ 83 est un champ de 8 octets qui contient la valeur courante du compteur de trames de commande externes. Le deuxième champ 83 permet plus de 18×10¹⁸ commandes sans changement de clé de chiffrement symétrique, et est réinitialisé à 0 lors de chaque changement de clé de chiffrement symétrique.

La trame de commande externe 80 comprend ensuite une *payload* 84, qui est un champ fonctionnel destiné à identifier la fonction de la trame : commande d'ouverture, commande de fermeture ou acquittement. La *payload* 84 est chiffrée par l'algorithme de chiffrement AES utilisant le mode d'opération GCM, et comporte 4 octets.

La *payload* 84 comprend un octet de commande qui prend les valeurs suivantes :
'0' : pour une commande d'ouverture de la vanne électromécanique 4 ;
'1' : pour une commande de fermeture de la vanne électromécanique.

L'octet de commande de la *payload* 84 de la trame de commande externe 80 a donc pour valeur '0' dans le cas d'une commande d'ouverture et pour valeur '1' dans le cas d'une commande de fermeture.

La *payload* 84 comprend de plus 3 octets non utilisés.

La trame de commande externe 80 comprend ensuite un code d'authentification de message 85 (aussi appelé tag) sur 16 octets généré par l'algorithme de chiffrement AES utilisant le mode d'opération GCM. Le code d'authentification de message 85 permet d'authentifier la trame de commande 80, d'assurer l'intégrité des données qu'elle contient et de confirmer que la trame de commande externe 80 provient bien d'un émetteur attendu (en l'occurrence ici d'un appareil mobile prévu pour cet usage).

Bien entendu, l'invention n'est pas limitée au mode de réalisation décrit mais englobe toute variante entrant dans le champ de l'invention telle que définie par les revendications.

Les technologies et les protocoles de communication qui permettent de connecter entre eux le SI, le concentrateur de données, le compteur de fluide, le boîtier de coupure et l'appareil mobile pourraient être différents de ceux décrits ici.

La première interface de communication et la deuxième interface de communication ne sont pas nécessairement des interfaces NFC. Un autre type de technologie ou de protocole, et par exemple une technologie et un protocole « propriétaires », pourraient être utilisés. Toute liaison radioélectrique, qui permet à la fois de transmettre des données (commandes, acquittements, etc.) et une énergie électrique suffisante pour alimenter une interface de communication, rentre dans le champ de l'invention.

L'invention peut bien sûr être mise en œuvre dans un compteur utilisé dans un réseau de distribution d'un fluide inflammable autre que le gaz naturel : autre gaz inflammable, pétrole, etc.

D'autres algorithmes de chiffrement pourraient être utilisés, et par exemple les algorithmes *Twofish, Serpent, Blowfish.* Plus généralement, les moyens d'authentification pourraient être différents de ceux décrits ici. Tout moyen d'authentification, permettant de certifier l'authenticité d'une trame, peut être utilisé.

## Revendications

1. Compteur de fluide inflammable (1) comportant :
- une première interface de communication (15) agencée pour communiquer via une liaison radioélectrique avec une deuxième interface de communication (20) d'un boîtier de coupure (3) comprenant une vanne électromécanique (4), et pour transmettre via la liaison radioélectrique une énergie électrique adaptée à alimenter électriquement la deuxième interface de communication du boîtier de coupure ;
- un capteur de température (27) agencé pour mesurer une température du fluide inflammable ;
- un module de traitement (16) agencé pour acquérir des mesures de température produites par le capteur de température (27), pour tenter de détecter la survenue d'une anomalie relative à la température du fluide inflammable, et pour, si la survenue d'une anomalie relative à la température du fluide inflammable est détectée, produire une trame de commande interne (60) intégrant une commande de fermeture de la vanne électromécanique (4) et transmettre ladite trame de commande interne à la deuxième interface de communication du boîtier de coupure via la première interface de communication pour fermer la vanne électromécanique.

2. Compteur de fluide inflammable selon la revendication 1, dans lequel le module de traitement (16) est agencé pour détecter la survenue d'une anomalie relative à la température du fluide inflammable lorsque la température du fluide inflammable est supérieure à un seuil de température prédéterminé ou lorsqu'une variation de la température du fluide inflammable est supérieure à un seuil de variation prédéterminé.

3. Compteur de fluide inflammable selon l'une des revendications précédentes, dans lequel le module de traitement (16) est agencé pour, suite à la détection de l'anomalie relative à la température du fluide inflammable et à la fermeture de la vanne électromécanique (4), acquérir via la première interface de communication (15) une trame de commande externe (80) intégrant une commande d'ouverture et pouvant être émise par un appareil mobile (28) amené à proximité du compteur de fluide inflammable (1), et pour produire une trame de commande interne intégrant la commande d'ouverture et transmettre ladite trame de commande interne à la deuxième interface de communication (20) du boîtier de coupure via la première interface de communication pour rouvrir la vanne électromécanique.

4. Compteur de fluide inflammable selon la revendication 3, dans lequel le module de traitement est agencé pour vérifier que la température du fluide inflammable est redevenue normale avant de rouvrir la vanne électromécanique.

5. Compteur de fluide inflammable selon la revendication 4, dans lequel le module de traitement est agencé pour vérifier en outre, suite à la réouverture de la vanne électromécanique (4), qu'une quantité du fluide inflammable distribuée pendant une durée prédéterminée est inférieure ou égale à un seuil de quantité prédéterminé, et pour refermer la vanne électromécanique (4) si ce n'est pas le cas.

6. Compteur de fluide inflammable selon l'une des revendications précédentes, dans lequel la première interface de communication (15) est agencée pour écrire la première trame de commande interne dans une mémoire (23) du boîtier de coupure (3), et pour lire une trame d'acquittement (70) dans la mémoire (23) du boîtier de coupure.

7. Compteur de fluide inflammable selon l'une des revendications précédentes, dans lequel la trame de commande interne (60) intègre une valeur courante d'un compteur de trames de commande internes, qui est incrémentée à chaque transmission de trame de commande interne par le compteur de fluide inflammable (1) au boîtier de coupure (3).

8. Compteur de fluide inflammable selon l'une des revendications précédentes, comprenant en outre des moyens d'authentification agencés pour authentifier la trame de commande interne.

9. Compteur de fluide inflammable selon la revendication 8, dans lequel les moyens d'authentification sont agencés pour chiffrer au moins partiellement la trame de commande interne en utilisant un algorithme de chiffrement ayant une clé de chiffrement symétrique qui est stockée dans une mémoire (17) du compteur de fluide inflammable et dans une mémoire (23) du boîtier de coupure (3).

10. Compteur de fluide inflammable selon la revendication 3 et la revendication 9, dans lequel les moyens d'authentification sont agencés pour déchiffrer la trame de commande externe.

11. Procédé de surveillance de la température d'un fluide inflammable, mis en œuvre dans compteur de fluide inflammable selon l'une des revendications précédentes, et comprenant les étapes de :
- acquérir les mesures de température produites par le capteur de température (27) ;
- tenter de détecter la survenue d'une anomalie relative à la température du fluide inflammable ;
- si la survenue d'une anomalie relative à la température du fluide inflammable est détectée, produire une trame de commande interne intégrant une commande de fermeture de la vanne électromécanique et transmettre ladite trame de commande interne à la deuxième interface de communication du boîtier de coupure via la première interface de communication pour fermer la vanne électromécanique.

12. Programme d'ordinateur comprenant des instructions qui conduisent le compteur de fluide inflammable selon l'une des revendications 1 à 10 à exécuter les étapes du procédé de surveillance selon la revendication 11.

13. Support d'enregistrement lisible par ordinateur, sur lequel est enregistré le programme d'ordinateur selon la revendication 12.

## Patentansprüche

1. Zähler (1) für brennbares Fluid, umfassend:
- eine erste Kommunikationsschnittstelle (15), die ausgebildet ist, um über eine Funkverbindung mit einer zweiten Kommunikationsschnittstelle (20) eines Abschaltgehäuses (3), das ein elektromechanisches Ventil (4) umfasst, zu kommunizieren und um über die Funkverbindung eine elektrische Energie zu übertragen, die geeignet ist, die zweite Kommunikationsschnittstelle des Abschaltgehäuses elektrisch zu versorgen;
- einen Temperatursensor (27), der ausgebildet ist, um eine Temperatur des brennbaren Fluids zu messen;
- ein Verarbeitungsmodul (16), das ausgebildet ist, um Temperaturmessungen, die von dem Temperatursensor (27) erzeugt werden, zu erfassen, um zu versuchen, das Auftreten einer Anomalie in Bezug auf die Temperatur des brennbaren Fluids zu erkennen und um, wenn das Auftreten einer Anomalie in Bezug auf die Temperatur des brennbaren Fluids erkannt wird, einen internen Befehlsrahmen (60) zu erzeugen, der einen Schließbefehl zum Schließen des elektromechanischen Ventils (4) integriert, und den genannten internen Befehlsrahmen über die erste Kommunikationsschnittstelle an die zweite Kommunikationsschnittstelle des Abschaltgehäuses zu übertragen, um das elektromechanische Ventil zu schließen.

2. Zähler für brennbares Fluid nach Anspruch 1, bei dem das Verarbeitungsmodul (16) ausgebildet ist, um das Auftreten einer Anomalie in Bezug auf die Temperatur des brennbaren Fluids zu erkennen, wenn die Temperatur des brennbaren Fluids höher als ein vorbestimmter Temperaturschwellenwert ist oder wenn eine Änderung der Temperatur des brennbaren Fluids größer als ein vorbestimmter Änderungsschwellenwert ist.

3. Zähler für brennbares Fluid nach einem der vorhergehenden Ansprüche, bei dem das Verarbeitungsmodul (16) ausgebildet ist, um nach dem Erkennen der Anomalie in Bezug auf die Temperatur des brennbaren Fluids und dem Schließen des elektromechanischen Ventils (4) über die erste Kommunikationsschnittstelle (15) einen externen Befehlsrahmen (80), der einen Öffnungsbefehl integriert und durch ein bewegliches Gerät (28), das in die Nähe des Zählers (1) für brennbares Fluid gebracht wird, ausgesandt werden kann, zu erfassen und um einen internen Befehlsrahmen, der den Öffnungsbefehl integriert, zu erzeugen und den genannten internen Befehlsrahmen über die erste Kommunikationsschnittstelle an die zweite Kommunikationsschnittstelle (20) des Abschaltgehäuses zu übertragen, um das elektromechanische Ventil erneut zu öffnen.

4. Zähler für brennbares Fluid nach Anspruch 3, bei dem das Verarbeitungsmodul ausgebildet ist, um zu verifizieren, dass die Temperatur des brennbaren Fluids vor dem erneuten Öffnen des elektromechanischen Ventils wieder normal geworden ist.

5. Zähler für brennbares Fluid nach Anspruch 4, bei dem das Verarbeitungsmodul ausgebildet ist, um ferner nach dem erneuten Öffnen des elektromechanischen Ventils (4) zu verifizieren, dass eine Menge des brennbaren Fluids, die während einer vorbestimmten Dauer verteilt wird, kleiner oder gleich einem vorbestimmten Mengenschwellenwert ist, und um das elektromechanische Ventil (4) erneut zu schließen, wenn dies nicht der Fall ist.

6. Zähler für brennbares Fluid nach einem der vorhergehenden Ansprüche, bei dem die erste Kommunikationsschnittstelle (15) ausgebildet ist, um den ersten internen Befehlsrahmen in einen Speicher (23) des Abschaltgehäuses (3) zu schreiben und um einen Bestätigungsrahmen (70) in dem Speicher (23) des Abschaltgehäuses zu lesen.

7. Zähler für brennbares Fluid nach einem der vorhergehenden Ansprüche, bei dem der interne Befehlsrahmen (60) einen aktuellen Wert eines Zählers für interne Befehlsrahmen integriert, der bei jeder Übertragung eines internen Befehlsrahmens durch den Zähler (1) für brennbares Fluid an das Abschaltgehäuse (3) inkrementiert wird.

8. Zähler für brennbares Fluid nach einem der vorhergehenden Ansprüche, ferner umfassend Authentifizierungsmittel, die ausgebildet sind, um den internen Befehlsrahmen zu authentifizieren.

9. Zähler für brennbares Fluid nach Anspruch 8, bei dem die Authentifizierungsmittel ausgebildet sind, um den internen Befehlsrahmen zumindest teilweise zu verschlüsseln, indem ein Verschlüsselungsalgorithmus verwendet wird, der einen symmetrischen Verschlüsselungsschlüssel hat, der in einem Speicher (17) des Zählers für brennbares Fluid und in einem Speicher (23) des Abschaltgehäuses (3) gespeichert ist.

10. Zähler für brennbares Fluid nach Anspruch 3 und Anspruch 9, bei dem die Authentifizierungsmittel ausgebildet sind, um den externen Befehlsrahmen zu entschlüsseln.

11. Überwachungsverfahren zur Überwachung der Temperatur eines brennbaren Fluids, durchgeführt in einem Zähler für brennbares Fluid nach einem der vorhergehenden Ansprüche und umfassend die Schritte:
- Erfassen der von dem Temperatursensor (27) erzeugten Temperaturmessungen;
- Versuchen, das Auftreten einer Anomalie in Bezug auf die Temperatur des brennbaren Fluids zu erkennen;
- wenn das Auftreten einer Anomalie in Bezug auf die Temperatur des brennbaren Fluids erkannt wird, Erzeugen eines internen Befehlsrahmens, der einen Schließbefehl zum Schließen des elektromechanischen Ventils integriert, und Übertragen des genannten internen Schließbefehls über die erste Kommunikationsschnittstelle an die zweite Kommunikationsschnittstelle des Abschaltgehäuses, um das elektromechanische Ventil zu schließen.

12. Computerprogramm, umfassend Anweisungen, die den Zähler für brennbares Fluid nach einem der Ansprüche 1 bis 10 veranlassen, die Schritte des Überwachungsverfahrens nach Anspruch 11 auszuführen.

13. Computerlesbares Aufzeichnungsmedium, auf dem das Computerprogramm nach Anspruch 12 gespeichert ist.

## Claims

1. A flammable fluid meter (1) comprising:
• a first communication interface (15) arranged both to communicate via a radio link with a second communication interface (20) of a cut-off unit (3) including an electromechanical valve (4), and also to transmit electrical energy via the radio link, the electrical energy being adapted to power the second communication interface of the cut-off unit;
• a temperature sensor (27) arranged to measure the temperature of the flammable fluid;
• a processor module (16) arranged to acquire temperature measurements produced by the temperature sensor (27), to attempt to detect the occurrence of an anomaly relating to the temperature of the flammable fluid, and if an anomaly relating to the temperature of the flammable fluid is detected, to produce an internal control frame (60) incorporating a closing command for closing the electromechanical valve (4) and to transmit said internal control frame to the second communication interface of the cut-off unit via the first communication interface in order to close the electromechanical valve.

2. A flammable fluid meter according to claim 1, wherein the processor module (16) is arranged to detect the occurrence of an anomaly relating to the temperature of the flammable fluid when the temperature of the flammable fluid is greater than a predetermined temperature threshold, or when a variation in the temperature of the flammable fluid is greater than a predetermined variation threshold.

3. A flammable fluid meter according to either preceding claim, wherein, following detection of an anomaly relating to the temperature of the flammable fluid and following closure of the electromechanical valve (4), the processor module (16) is arranged to act via the first communication interface (15) to acquire an external control frame (80) incorporating an opening command and potentially transmitted by a mobile device (28) brought into the proximity of the flammable fluid meter (1), and to produce an internal control frame incorporating the opening command and to transmit said internal control frame to the second communication interface (20) of the cut-off unit via the first communication interface in order to re-open the electromechanical valve.

4. A flammable fluid meter according to claim 3, wherein the processor module is arranged to verify that the temperature of the flammable fluid has returned to normal before re-opening the electromechanical valve.

5. A flammable fluid meter according to claim 4, wherein, after re-opening of the electromechanical valve (4), the processor module is arranged also to verify that the quantity of flammable fluid distributed during a predetermined duration is less than or equal to a predetermined quantity threshold, and to re-close the electromechanical valve (4) if that is not so.

6. A flammable fluid meter according to any preceding claim, wherein the first communication interface (15) is arranged to write the internal control frame in a memory (23) of the cut-off unit (3) and to read an acknowledgement frame (70) in the memory (23) of the cut-off unit.

7. A flammable fluid meter according to any preceding claim, wherein the internal control frame (60) includes a current value of an internal control frame counter that is incremented each time an internal control frame is transmitted by the flammable fluid meter (1) to the cut-off unit (3).

8. A flammable fluid meter according to any preceding claim, further comprising authentication means arranged to authenticate the internal control frame.

9. A flammable fluid meter according to claim 8, wherein the authentication means are arranged to encrypt at least part of the internal control frame by using an encryption algorithm having a symmetrical encryption key that is stored both in a memory (17) of the flammable fluid meter and also in a memory (23) of the cut-off unit (3).

10. A flammable fluid meter according to claim 3 and claim 9, wherein the authentication means are arranged to decrypt the external control frame.

11. A monitoring method for monitoring the temperature of a flammable fluid, the method being performed in a flammable fluid meter according to any preceding claim, and comprising the steps of:
• acquiring the temperature measurements produced by the temperature sensor (27);
• attempting to detect the occurrence of an anomaly relating to the temperature of the flammable fluid;
• if the occurrence of an anomaly relating to the temperature of the flammable fluid is detected, producing an internal control frame incorporating a closing command for closing the electromechanical valve and transmitting said internal control frame to the second communication interface of the cut-off unit via the first communication interface in order to close the electromechanical valve.

12. A computer program including instructions for causing the flammable fluid meter according to any one of claims 1 to 10 to execute the steps of the monitoring method according to claim 11.

13. A computer readable storage medium having stored thereon the computer program according to claim 12.
